# EUROPÄISCHE PATENTSCHRIFT

(11) **EP 3 377 377 B1**
(45) Veröffentlichungstag und Bekanntmachung des Hinweises auf die Patenterteilung: **29.07.2020**
(21) Anmeldenummer: 16784533.8
(22) Anmeldetag: 21.10.2016
(51) Int. Cl.: B60T 17/22, F16D 66/00

(54) **ANORDNUNG, VORRICHTUNG MIT SO EINER ANORDNUNG, SCHEIBENBREMSE MIT SO EINER ANORDNUNG UND VERFAHREN ZUR MESSUNG EINES DURCH BREMSKRAFT ERZEUGTEN VERSCHIEBEWEGES**
ASSEMBLY, DEVICE WITH SUCH AN ASSEMBLY, DISC BRAKE WITH SUCH AN ASSEMBLY AND
METHOD FOR THE MEASUREMENT OF A BRAKE FORCE INDUCED TRANSLATORY MOVEMENT
AGENCEMENT, DISPOSITIF AVEC UN TEL AGENCEMENT, FREIN À DISQUE AVEC UN TEL AGENCEMENT ET PROCÉDÉ AVEC UN TEL AGENCEMENT DE MESURER UN DEPLACEMENT GENERÉE PAR UN FORCE DE FREINAGE

(30) Priorität: 20.11.2015 DE 102015222931
(43) Veröffentlichungstag der Anmeldung: 26.09.2018
(73) Patentinhaber: Continental Teves AG & Co. OHG, 60488 Frankfurt am Main (DE)
(72) Erfinder: LOHBERG, Peter, 61381 Friedrichsdorf (DE); ZYDEK, Michael, 60529 Frankfurt (DE); HEISE, Andreas, 64390 Erzhausen (DE); ERLER, Wolfgang, 65232 Taunusstein (DE)
(86) Internationale Anmeldenummer: PCT/EP2016/075431
(87) Internationale Veröffentlichungsnummer: WO 2017/084832

(56) Entgegenhaltungen:
- WO-A1-03/071150
- WO-A1-2012/059313
- DE-A1-102005 013 142
- DE-B3-102006 029 978
- GB-A- 2 176 555
- US-A1- 2003 111 305
- US-A1- 2008 077 302
- US-A1- 2008 078 629

## Beschreibung

Die Erfindung betrifft eine Anordnung zur Bestimmung einer Maßgröße für eine wirkende Bremskraft an einer Bremse, umfassend einen Träger, weiterhin umfassend einen Bremshalter. Sie betrifft weiterhin eine Vorrichtung mit einer derartigen Anordnung, eine Scheibenbremse mit einer derartigen Anordnung und ein Verfahren zur Bestimmung einer Maßgröße für eine wirkende Bremskraft an einer Bremse.

Scheibenbremsen für Kraftfahrzeuge weisen gewöhnlich eine auf der Nabe eines zu bremsenden Rades mitlaufende Bremsscheibe auf, an die bei einem Bremsvorgang beidseitig Bremsbeläge gepresst werden. Die Reibbeläge sind in einem Bremssattel angeordnet, welcher die Bremsscheibe umspannt. Bevorzugt finden bei Kraftfahrzeugen Schwimmsattelbremsen Verwendung, bei denen der Aktuator nur auf einer Seite der Bremsscheibe angeordnet ist, aber aufgrund des schwimmend gelagerten Bremssattels bei einem Bremsvorgang beide Reibbeläge gegen die Bremsscheibe presst. Der Aktuator kann hydraulisch oder elektromechanisch ausgeführt sein bzw. betätigt werden.

Technische Vorschläge zur Erfassung von Bremskräften sind bereits bekannt. In der DE 10 2006 029 978 B3 ist beispielsweise eine Methode zur Messung der elastischen Aufweitung des Bremssattels mit Hilfe von Dehnungsmessstreifen als Maß für die Zuspannkraft (Normalkraft) beschrieben.

Die DE 10 2005 013 142 A1 beschreibt die Messung der Bremskraft (Umfangskraft) an Rahmensätteln durch die Wegmessung zweier gegeneinander beweglicher Maschinenteile.

In der Patentanmeldung WO 2012/059313 A1 ist ein Verfahren erläutert, bei dem ein Haltearm des Bremshalters einer Schwimmsattelbremse als Balkenfeder genutzt wird, deren Verbiegung durch Umfangskräfte an der Bremsscheibe gemessen und als Maß für wirksame Umfangskraft gewertet wird.

Die DE 10 2008 042 298 A1 beschreibt einen Bremssattel für eine Scheibenbremse, wobei eine Einrichtung zur Messung der Verformung des Bremssattels durch eine Spannkraft bei Betätigung der Scheibenbremse vorgesehen ist, die einen unbeweglich mit dem Bremssattel verbundenen Halter aufweist, dessen Bewegung gegenüber dem Bremssattel gemessen wird.

Bei bekannten Lösungen kann bei der gemessenen gegenseitigen Verschiebung oder Spannung/Dehnung von Bauteilen ein Hystereeffekt auftreten, so dass die Anordnung nach dem Auftreten von Zuspannkräften nicht genau genug in ihren ursprünglichen Zustand zurückkehrt, so dass die Messungen ungenau werden. Dies betrifft insbesondere Systeme, bei denen eine Verformung des Bremssattels gemessen wird. Nach dem Zuspannen der Bremse und ihrem darauf folgenden Lockern können Komponenten hängen bzw. nicht unmittelbar in ihre Ausgansstellung gegen oder sich sogar dauerhaft verformen.

Der Erfindung liegt daher die Aufgabe zugrunde, eine präzise und reproduzierbare Messung einer die Bremskraft charakterisierenden Maßgröße zu ermöglichen.

In Bezug auf die Anordnung wird diese Aufgabe erfindungsgemäß dadurch gelöst, dass der Bremshalter elastisch und lateral verschiebbar gegenüber dem Träger angeordnet ist, wobei der Bremshalter mit wenigstens einem elastischen Verbiegeelement an dem Träger fixiert ist, wobei eine Sensorvorrichtung zur Bestimmung des Verschiebeweges des Bremshalters gegenüber dem Träger vorgesehen ist.

Vorteilhafte Ausgestaltungen der Erfindung sind Gegenstand der Unteransprüche.

Die Erfindung geht von der Überlegung aus, dass oben genannte Messungenauigkeiten aufgrund von Hysterese vermieden werden sollten, um möglichst präzise und verlässliche Informationen ermitteln zu können. Da der Verschiebeweg typischerweise sehr gering ist und im Bereich von mehrere Mikrometern bis Millimetern liegt, können schon geringe Hystereeffekte Auswirkungen haben, die das Messergebnis als Input für Regelsysteme unbrauchbar machen.

Wie nunmehr erkannt wurde, lässt eine die Bremskraft charakterisierende Größe zuverlässig und präzise bestimmen, indem der Bremshalter über wenigstens ein elastisches Verbiegeelement mit dem Träger verbunden wird, das bei einer wirkenden Umfangskraft eine elastische Deformation erfährt und danach wieder in seine Ausgangsstellung zurückkehrt, wobei die Verschiebung Bremshalters gegenüber dem Träger gemessen wird. Es wird also eine Verbiegung des jeweiligen Verbiegeelementes gemessen und keine Verformung des Bremshalters an sich, wodurch die genannten Hystereeffekte vermieden werden können.

Die Erfindung dient insbesondere zur Anwendung im Maschinen- und Fahrzeugbau, speziell in der Kfz-Industrie, hierbei insbesondere zur Erfassung von Umfangskräften an Bremsscheiben im Zusammenhang mit geregelten Bremsvorgängen.

Der Bremshalter ist vorzugsweise in der Richtung gegenüber dem Träger verschiebbar, in der aufgrund der Bremskraft die Umfangskraft F_{U} auf den Bremshalter wirkt.

Vorteilhafterweise ist der Träger bzw. das Trägerelement ein ortsfestes Teil des Fahrgestells bzw. Chassis des Fahrzeuges. Auf diese Weise wird eine besonders robuste Befestigung des Bremshalters erzielt.

In einer bevorzugten Ausführungsform sind, insbesondere genau, zwei Verbiegeelemente vorgesehen, die durch Öffnungen des Trägers geführt sind und auf der dem Bremshalter abgewandten Seite, insbesondere jeweils an einem Ende, in starr mit dem Träger verbundenen Stützelementen befestigt sind.

Das jeweilige Verbiegeelement ist bevorzugt in den Bremshalter eingesetzt. Verbiegeelement und Bremshalter können alternativ auch einstückig ausgeführt sein. Das jeweilige Verbiegeelement ist bevorzugt aus einem federnden Material mit ausreichender Festigkeit gebildet, beispielsweise aus federndem Stahl. Es ist bevorzugt derart ausgebildet, dass es gleichzeitig als nicht-ermüdende Biegefeder wirkt und gleichzeitig eine ausreichende Festigkeit zum Halten des Bremshalters aufweist.

Das jeweilige Verbiegeelement ist bevorzugt jeweils lateral von einem Raum umgeben, in den es sich bei lateraler Verschiebung des Bremshalters gegenüber dem Träger dehnen kann. Dieser Raum erlaubt insbesondere eine Verbiegung der Verbiegeelemente in Richtung der Bewegungsrichtung des Bremshalters gegenüber dem Träger. Der Raum kann beispielsweise im Wesentlichen rechteckig oder auch als Ringraum ausgebildet sein.

Die Sensorvorrichtung umfasst vorteilhafterweise ein sensorisch aktives und ein sensorisch passives Element umfasst, wobei das eine Sensorelement starr mit dem Träger oder Bremshalter ortsfest verbunden ist und das andere Sensorelement ortsfest mit dem Bremshalter oder Träger verbunden ist. Die beiden sensorischen Elemente sind dabei sensorisch wirksam, d. h., sie sind in einer Entfernung und Orientierung gegeneinander angebracht, dass die räumliche Veränderung des sensorisch passiven Elementes gegenüber dem sensorisch aktiven Element von diesem detektiert werden kann. Dies erfolgt bevorzugt mit einem möglichst hohen Signal-zu-Rausch-Verhältnis. Die Anordnung der beiden sensorischen Elemente erfolgt somit in einer sensorisch wirksamen Verbindung. Dies wird bevorzugt erreicht, dass zwischen den beiden Sensorelementen ein Luftspalt vorgesehen wird, wobei die beiden Sensorelemente über eine elektromagnetische Feldkopplung verbunden sind.

In einer bevorzugten Ausführungsform sind das sensorisch aktive Element ortsfest mit dem Träger und das sensorisch passive Element ortsfest mit dem Bremshalter verbunden. In dieser Ausführung bewegt sich somit das sensorisch passive Element mit dem Bremshalter mit, während das sensorisch aktive Element diese Bewegung sensiert bzw. misst. Das Signal des sensorisch aktiven Elementes ist ein Maß für die an der Bremse wirkende Kraft. In dieser Ausführungsform ist das Führen der Stromversorgungs- und/oder Signalleitungen des sensorisch aktiven Elementes besonders einfach möglich, da dieses am Träger bzw. Chassis befestigt ist und sich bei auftretenden Bremskräften nicht bewegt. Zudem können die Leitungen von der Bremse weg verlegt werden und interferieren nicht mit weiteren Bauteilen.

In einer alternativen Konfiguration ist das sensorisch aktive Element am Bremshalter und das sensorisch passive Element am Träger angeordnet.

Das sensorisch passive Element ist bevorzugt in einer Maßverkörperung aufgenommen.

In einer ersten bevorzugten Ausführungsform ist das sensorisch passive Element ein Permanentmagnet und das sensorisch aktive Element ist ein magnetoresistives Winkelmesselement.

In einer zweiten bevorzugten Ausführungsform ist das sensorisch passive Element ein Element aus ferritischem Material und das sensorisch aktive Element ist eine Spulenanordnung.

In Bezug auf die Vorrichtung wird die oben genannte Aufgabe erfindungsgemäß gelöst mit einer oben beschriebenen Anordnung, weiterhin umfassend eine Steuer- und Regeleinheit, die eingangsseitig mit der Sensorvorrichtung verbunden ist und eine Bremsregelung anhand wenigstens eines Messsignals der Sensorvorrichtung durchführt. Bevorzugt umfasst die Steuer- und Regeleinheit eine Verarbeitungslogik zur Ermittlung bzw. Bestimmung einer Bremsenstellgröße und/oder eines wirkenden Bremsmomentes anhand wenigstens eines Messsignals der Sensorvorrichtung.

In Bezug auf die Scheibenbremse wird die oben genannte Aufgabe erfindungsgemäß gelöst mit einer oben beschriebenen Anordnung.

In Bezug auf das Verfahren zur Ermittlung einer Maßgröße für eine wirkende Bremskraft an einer, insbesondere hydraulisch betätigbaren, Scheibenbremse eines Kraftfahrzeuges wird die oben genannte Aufgabe erfindungsgemäß gelöst mit einer oben beschrieben Anordnung, wobei die laterale Verschiebung des Bremshalters gegenüber dem Trägers gemessen wird.

Bevorzugt wird aus der gemessenen lateralen Verschiebung eine an der Bremse wirkende Bremskraft bestimmt.

Die Vorteile der Erfindung liegen insbesondere darin, dass durch die Messung der Verschiebung des im Wesentlichen gesamten Bremshalters gegenüber dem Träger eine besonders robuste und zuverlässige Bestimmung einer für die Bremskraft charakterisierenden Maßgröße erzielt werden kann. Durch die bei einer Bremsung erfolgende Verbiegung von dem jeweiligen Verbiegeelement kann durch geeignete Dimensionierung sehr präzise eingestellt werden. Auf diese Weise kann eine präzise Regelgröße erzeugt werden für Regelsysteme im Kraftfahrzeug.

Der gemessene Verschiebeweg wird vorteilhafterweise als Eingangsgröße für eine Bremsdruckregelung in einem Fahrassistenz- und/oder Fahrsicherheitssystem eingesetzt. Dies ermöglicht insbesondere auch den Einsatz bei Systemen für hochautomatisiertes Verfahren, in denen eine präzise Kenntnis der wirkenden Bremskräfte benötigt wird.

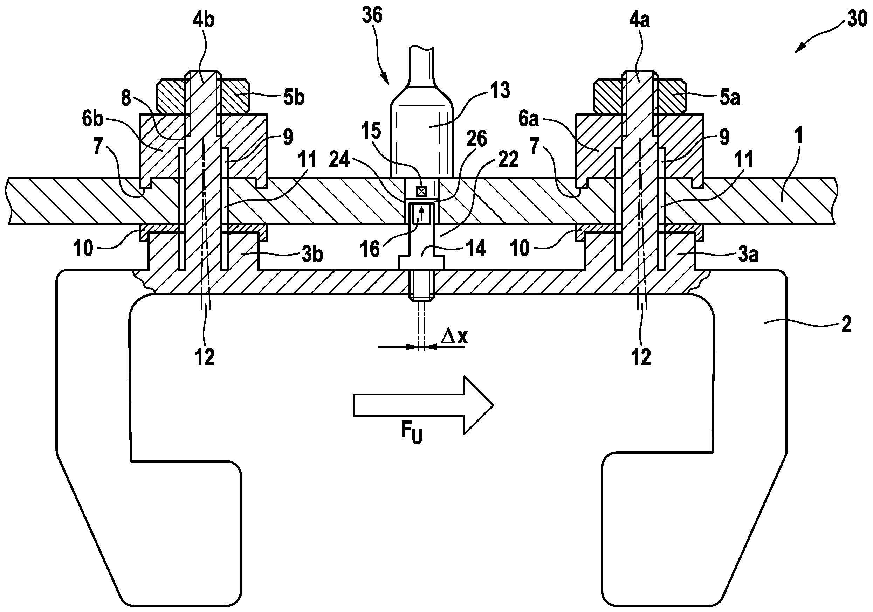

Ein Ausführungsbeispiel der Erfindung wird anhand einer Zeichnung näher erläutert. Darin zeigt die einzige Figur in stark schematisierter Darstellung eine Anordnung zur Bestimmung eines durch Bremskraft erzeugten Verschiebeweges in einer bevorzugten Ausführungsform.

Die Anordnung 30 umfasst einen Träger 1, der bevorzugt ein Teil des ortsfesten Fahrzeuggestells bzw. Fahrzeug-Chassis ist. Ein Bremshalter 2 ist für eine Scheibenbremse mit Schwimmsattel ausgebildet. Der Bremshalter 2 ist elastisch verschiebbar an dem Träger 1 befestigt. Der Bremshalter 2 ist dabei in lateraler Richtung gegenüber dem Träger 1 elastisch verschiebbar.

Der Bremshalter 2 und seine Befestigungskomponenten beinhalten den wesentlichen Teil der Mechanik zur Messung eines Verschiebeweges Δx unter dem Einfluss einer Bremskraft F_{U}. Der Bremshalter 2 umfasst bevorzugt die mechanische Gesamtheit einer Schwimmsattelbremse, die über Bremskolben, Bremsfaust, Bremsbeläge und eine Bremsscheibe die Bremskraft F_{U} erzeugt.

Der Bremshalter 2 liegt über Anlegeelemente 3a, 3b, die bevorzugt als Flansche ausgebildet sind, am Träger 1 an. Der Bremshalter 2 ist über Verbiegeelemente 4a, 4b, die im vorliegenden Ausführungsbeispiel als Bolzen ausgebildet sind, mit dem Träger 1 verschraubt. Hierzu dienen die Muttern 5a, 5b und die Stützelemente 6a, 6b. Die mantelförmigen Stützelemente 6a, 6b sind in den Träger 1 bzw. das Chassis formschlüssig eingelassen in jeweils einer Ausnehmung 7 im Träger und umfassen im Bereich 8 auch die Bolzen mit Formschluss, während sie jeweils in im Bereich 9 den Verbiegeelementen 4a, 4b Spiel, insbesondere laterales Spiel, gewähren. Zwischen beiden Anlegeelementen 3a, 3b und dem Träger 1 sind Zwischenelemente 10 angeordnet, die ein Gleiten der Anlegeelemente 3a, 3b am Träger 1 ermöglichen oder deren Material sich elastisch unter einer Scherkraft verformen kann.

Wie aus der FIG. zu ersehen ist, umgibt die Verbiegeelemente 4a, 4b ein Hohlraum 11, der insbesondere als Ringraum ausgebildet ist, und der insbesondere zwischen der Anlegeelementseite bzw. Flanschseite und ihrer Verschraubung angeordnet ist, in dem sich die Verbiegeelemente 4a, 4b unter Einfluss von einer Kraft F_{U} verbiegen können, wie hier symbolisch mit dem Bezugszeichen 12 dargestellt ist. Diese Verbiegung hat einen Verschiebeweg Δx des Bremshalters 2 gegenüber dem Träger 1 zur Folge.

Zur Messung des Verschiebeweges Δx ist eine Sensorvorrichtung 36 vorgesehen. Die Sensorvorrichtung 36 umfasst einen am Träger 1 ortsfest montierten Sensor 13, der mit einer Maßverkörperung 14 zusammenwirkt, die in einem Hohlraum 22, der zwischen Träger 1 und Bremshalter 2 gebildet ist, einer Bohrung 24 im Träger 1 gegenüber steht. Die Maßverkörperung 14 ist ortsfest am Bremshalter 2 montiert und bildet so den Verschiebeweg Δx ab. Der Sensor 13 enthält ein sensorisch aktives Element 15, und die Maßverkörperung 14 enthält ein sensorisch passives Element 16. Zwischen Sensor 13 und Maßverkörperung 14 existiert ein Luftspalt 26, und zwischen aktivem und passivem sensorischem Element besteht eine Feldkopplung. Zur praktischen Realisierung der Sensorik sollte darauf geachtet werden, dass das benutzte Verfahren eine ausreichend hohe Ortsauflösung ermöglicht.

In einer ersten bevorzugten Ausführung wird ein magnetostatisches Verfahren unter Benutzung eines Permanentmagneten als sensorisch passives Element zur Detektion des Verschiebeweges Δx verwendet. Als sensorisch aktives Element wird in dieser ersten bevorzugten Variante ein magnetoresistives Winkelmesselement verwendet, welches die mit der Verschiebung Δx verbundene Drehung der Vektorrichtung des permanentmagnetischen Feldes misst. In einer zweiten bevorzugten Variante wird eine Hall-Anordnung als sensorisch aktives Element zur Messung der magnetischen Ortsamplitude und seiner Verschiebung in Abhängigkeit von Δx eingesetzt.

In einer zweiten bevorzugten Ausführungsform wird ein magnetodynamisches Verfahren unter Verwendung von ferritischem Material als sensorisch passivem Element verwendet. Eine Spulenanordnung mit entsprechender elektronischer Beschaltung wird dabei als sensorisch aktives Element zur Messung der mit Δx verbundenen Veränderung der induktiven Verkopplung zum sensorisch passiven Element eingesetzt.

Die in der FIG. gezeigte Konfiguration ist lediglich eine schematische Darstellung einer bevorzugten Ausführungsform der vorgeschlagenen Anordnung. In der gezeigten Ausführung sind die Verbiegeelemente 4a, 4b separate Bauteile, die in den Halter 2 eingesetzt sind. Die Verbiegeelemente 4a, 4b können alternativ auch einteilig mit dem Bremshalter 2 ausgebildet sein.

Die Zwischenelemente 10 sind in der in der FIG. gezeigten bevorzugten Ausführungsform Kappen. Eine Gleit- oder Verformschicht kann z. B. auch in die Anlegeelemente 3a, 3b bzw. Flansche eingelegt sein. Das Material dieser Schicht kann ein geeigneter elastischer Kunststoff sein oder Material, das von Gleitlagern her bekannt ist.

## Patentansprüche

1. Anordnung (30) zur Bestimmung einer Maßgröße für eine wirkende Bremskraft an einer Bremse, umfassend einen Träger (1), weiterhin umfassend einen Bremshalter (2),
**dadurch gekennzeichnet, dass**
der Bremshalter (2) elastisch und lateral verschiebbar gegenüber dem Träger (1) angeordnet ist, wobei der Bremshalter (2) mit wenigstens einem elastischen Verbiegeelement (4a, 4b) an dem Träger fixiert ist, wobei eine Sensorvorrichtung (36) zur Bestimmung des Verschiebeweges (Δx) des Bremshalters gegenüber dem Träger (1) vorgesehen ist.

2. Anordnung (30) nach Anspruch 1, wobei der Träger (1) Teil des Fahrgestells ist.

3. Anordnung (30) nach Anspruch 1 oder 2, wobei zwei Verbiegeelemente (4a, 4b) vorgesehen sind, die durch Öffnungen des Trägers (1) geführt sind und auf der dem Bremshalter (2) abgewandten Seite, insbesondere jeweils an ihrem Ende, in starr mit dem Träger (1) verbundenen Stützelementen (6a, 6b) befestigt sind.

4. Anordnung (30) nach einem der Ansprüche 1 bis 3, wobei das jeweilige Verbiegeelement (4a, 4b) in den Bremshalter (2) eingesetzt ist.

5. Anordnung (30) nach einem der Ansprüche 1 bis 4, wobei das jeweilige Verbiegeelement (4a, 4b) jeweils lateral von einem Raum (11) umgeben ist, in den sie sich bei lateraler Verschiebung des Bremshalters (2) gegenüber dem Träger (1) dehnen kann.

6. Anordnung (30) nach einem der Ansprüche 1 bis 5, wobei die Sensorvorrichtung (36) ein sensorisch aktives (15) und ein sensorisch passives (16) Element umfasst, und wobei das eine Sensorelement (15, 16) starr mit dem Träger (1) oder Bremshalter (2) ortsfest verbunden ist und das andere Sensorelement (15, 16) ortsfest mit dem Bremshalter (2) oder Träger (1) verbunden ist.

7. Anordnung (30) nach Anspruch 6, wobei das sensorisch aktive Element (15) ortsfest mit dem Träger (1) und das sensorisch passive Element (16) ortsfest mit dem Bremshalter (2) verbunden sind.

8. Anordnung (30) nach Anspruch 6 oder 7, wobei das sensorisch passive Element (16) in einer Maßverkörperung (14) aufgenommen ist.

9. Anordnung (30) nach einem der Ansprüche 6 bis 8, wobei das sensorisch passive Element (16) ein Permanentmagnet ist, und wobei das sensorisch aktive Element (15) ein magnetoresistives Winkelmesselement ist.

10. Anordnung (30) nach einem der Ansprüche 6 bis 9, wobei das sensorisch passive Element (16) ein Element aus ferritischem Material ist, und wobei das sensorisch aktive Element (15) eine Spulenanordnung ist.

11. Vorrichtung zur Ermittlung der Maßgröße für eine wirkende Bremskraft an einer, insbesondere hydraulisch betätigbaren, Scheibenbremse eines Kraftfahrzeuges, umfassend eine Anordnung (30) nach einem der Ansprüche 1 bis 10, weiterhin umfassend eine Steuer- und Regeleinheit, die eingangsseitig mit der Sensorvorrichtung (36) verbunden ist und eine Bremsregelung anhand wenigstens eines Messsignals der Sensorvorrichtung (36) durchführt.

12. Scheibenbremse, insbesondere für ein Kraftfahrzeug, mit einer Anordnung (30) nach einem der Ansprüche 1 bis 10.

13. Verfahren zur Ermittlung einer Maßgröße für eine wirkende Bremskraft an einer, insbesondere hydraulisch betätigbaren, Scheibenbremse eines Kraftfahrzeuges mit einer Anordnung (30) nach einem der Ansprüche 1 bis 10, wobei die laterale Verschiebung des Bremshalters (2) gegenüber dem Trägers (1) gemessen wird.

## Claims

1. Arrangement (30) for determining a magnitude for an active brake force on a brake, comprising a carrier (1), comprising, furthermore, a brake mount (2), **characterized in that** the brake mount (2) is arranged such that it can be displaced elastically and laterally with respect to the carrier (1), the brake mount (2) being fixed on the carrier by way of at least one elastic bending element (4a, 4b), a sensor apparatus (36) for the determination of the displacement travel (Δx) of the brake mount with respect to the carrier (1) being provided.

2. Arrangement (30) according to Claim 1, the carrier (1) being part of the chassis.

3. Arrangement (30) according to Claim 1 or 2, two bending elements (4a, 4b) being provided which are guided through openings of the carrier (1) and being fastened on the side which faces away from the brake mount (2), in particular in each case at their end, in supporting elements (6a, 6b) which are connected rigidly to the carrier (1).

4. Arrangement (30) according to one of Claims 1 to 3, the respective bending element (4a, 4b) being inserted into the brake mount (2).

5. Arrangement (30) according to one of Claims 1 to 4, the respective bending element (4a, 4b) being surrounded in each case laterally by a space (11), into which the said arrangement (30) can expand in the case of a lateral displacement of the brake mount (2) with respect to the carrier (1).

6. Arrangement (30) according to one of Claims 1 to 5, the sensor apparatus (36) comprising an active-sensor element (15) and a passive-sensor element (16), and the one sensor element (15, 16) being connected rigidly to the carrier (1) or brake mount (2) in an immovable manner, and the other sensor element (15, 16) being connected immovably to the brake mount (2) or carrier (1).

7. Arrangement (30) according to Claim 6, the active-sensor element (15) being connected immovably to the carrier (1), and the passive-sensor element (16) being connected immovably to the brake mount (2).

8. Arrangement (30) according to Claim 6 or 7, the passive-sensor element (16) being received in a measuring scale (14).

9. Arrangement (30) according to one of Claims 6 to 8, the passive-sensor element (16) being a permanent magnet, and the active-sensor element (15) being a magnetoresistive angle measuring element.

10. Arrangement (30) according to one of Claims 6 to 9, the passive-sensor element (16) being an element made from ferritic material, and the active-sensor element (15) being a coil arrangement.

11. Apparatus for determining the magnitude for an active brake force on a disc brake of a motor vehicle, which disc brake, in particular, can be actuated hydraulically, comprising an arrangement (30) according to one of Claims 1 to 10, comprising, furthermore, a control and regulating unit which is connected on the inlet side to the sensor apparatus (36) and carries out a brake regulation operation on the basis of at least one measurement signal of the sensor apparatus (36).

12. Disc brake, in particular for a motor vehicle, with an arrangement (30) according to one of Claims 1 to 10.

13. Method for determining a magnitude for an active brake force on a disc brake of a motor vehicle, which brake force, in particular, can be actuated hydraulically, with an arrangement (30) according to one of Claims 1 to 10, the lateral displacement of the brake mount (2) with respect to the carrier (1) being measured.

## Revendications

1. Agencement (30) pour déterminer une grandeur dimensionnelle pour une force de freinage agissant sur un frein, comprenant un support (1), et comprenant en outre un porte-frein (2), **caractérisé en ce que**
le porte-frein (2) est disposé de manière déplaçable élastiquement et latéralement par rapport au support (1), le porte-frein (2) étant fixé au support avec au moins un élément de déformation élastique (4a, 4b), un dispositif de capteur (36) étant prévu pour déterminer la course de déplacement (Δx) du porte-frein par rapport au support (1).

2. Agencement (30) selon la revendication 1, le support (1) faisant partie du châssis.

3. Agencement (30) selon la revendication 1 ou 2, dans lequel deux éléments de déformation (4a, 4b) sont prévus, lesquels sont guidés à travers des ouvertures du support (1) et sont fixés du côté opposé au porte-frein (2), en particulier à chaque fois à leur extrémité, dans des éléments de support (6a, 6b) connectés rigidement au support (1) .

4. Agencement (30) selon l'une quelconque des revendications 1 à 3, dans lequel l'élément de déformation respectif (4a, 4b) est inséré dans le porte-frein (2).

5. Agencement (30) selon l'une quelconque des revendications 1 à 4, dans lequel l'élément de déformation respectif (4a, 4b) est à chaque fois entouré latéralement par un espace (11) dans lequel il peut s'étirer dans le cas d'un déplacement latéral du porte-frein (2) par rapport au support (1).

6. Agencement (30) selon l'une quelconque des revendications 1 à 5, dans lequel le dispositif de capteur (36) comprend un élément de capteur actif (15) et un élément de capteur passif (16), et l'un des éléments de capteur (15, 16) étant connecté fixement et rigidement au support (1) ou au porte-frein (2) et l'autre élément de capteur (15, 16) étant connecté fixement au porte-frein (2) ou au support (1).

7. Agencement (30) selon la revendication 6, dans lequel l'élément de capteur actif (15) est connecté fixement au support (1) et l'élément de capteur passif (16) est connecté fixement au porte-frein (2).

8. Agencement (30) selon la revendication 6 ou 7, dans lequel l'élément de capteur passif (16) est reçu dans une mesure matérialisée (14).

9. Agencement (30) selon l'une quelconque des revendications 6 à 8, dans lequel l'élément de capteur passif (16) est un aimant permanent et dans lequel l'élément de capteur actif (15) est un élément de mesure angulaire magnéto-résistif.

10. Agencement (30) selon l'une quelconque des revendications 6 à 9, dans lequel l'élément de capteur passif (16) est un élément en matériau ferritique et dans lequel l'élément de capteur actif (15) est un agencement de bobine.

11. Dispositif pour déterminer la grandeur dimensionnelle d'une force de freinage agissant sur un frein à disque, en particulier à commande hydraulique, d'un véhicule automobile, comprenant un agencement (30) selon l'une quelconque des revendications 1 à 10, comprenant en outre une unité de commande et de régulation qui est connectée du côté de l'entrée au dispositif de capteur (36) et qui effectue une régulation de freinage à l'aide d'au moins un signal de mesure du dispositif de capteur (36).

12. Frein à disque, en particulier pour un véhicule automobile, comprenant un agencement (30) selon l'une quelconque des revendications 1 à 10.

13. Procédé pour déterminer une grandeur dimensionnelle pour une force de freinage agissant sur un frein à disque, en particulier à commande hydraulique, d'un véhicule automobile, comprenant un agencement (30) selon l'une quelconque des revendications 1 à 10, le déplacement latéral du porte-frein (2) par rapport au support (1) étant mesuré.
